# EUROPÄISCHE PATENTSCHRIFT

(11) **EP 3 793 707 B1**
(45) Veröffentlichungstag und Bekanntmachung des Hinweises auf die Patenterteilung: **09.07.2025**
(21) Anmeldenummer: 19725102.8
(22) Anmeldetag: 15.05.2019
(51) Int. Cl.: B01D 35/147, B01D 35/153, B01D 35/16, B01D 36/04, B01D 29/21, B01D 29/54, B04B 5/00

(54) **FILTER MIT EINEM FILTERGEHÄUSE UND EINEM ZWISCHENDECKEL**
FILTER WITH A FILTER HOUSING AND AN INTERMEDIATE COVER
FILTRE AVEC UN BOÎTIER ET UN COUVERCLE INTERMÉDIAIRE

(30) Priorität: 18.05.2018 DE 102018004158
(43) Veröffentlichungstag der Anmeldung: 24.03.2021
(73) Patentinhaber: MANN+HUMMEL GmbH, 71636 Ludwigsburg (DE)
(72) Erfinder: RAZGANI, Idriss, Tanger 90060 (MA); VOGT, Christian, 71636 Ludwigsburg (DE); SVOBODA, Jan, 675 07 Cíhalín (CZ); JOKSCHAS, Günter, 71540 Murrhardt (DE); TRAUTMANN, Pius, 70499 Stuttgart (DE)
(74) Vertreter: Mann + Hummel Intellectual Property
(86) Internationale Anmeldenummer: PCT/EP2019/062517
(87) Internationale Veröffentlichungsnummer: WO 2019/219763

(56) Entgegenhaltungen:
- EP-A1- 1 260 260
- EP-B1- 1 260 260
- DE-A1- 10 344 664
- DE-A1- 102010 054 349
- DE-A1- 102014 110 583
- DE-B4- 10 344 664
- FR-A1- 2 900 350

## Beschreibung

### Technisches Gebiet

Die Erfindung betrifft einen Filter umfassend ein Filtergehäuse, einen Filtereinsatz und einen Zwischendeckel.

### Stand der Technik

Aus der US 4,640,772 A ist ein Ölfilter mit einem Filter und einer Zentrifuge bekannt, wobei der Filter in Form eines anschraubbaren Wechselfilters ausgebildet an einem Montageflansch angeschraubt ist und der Zentrifugenrotor ebenfalls auf dem Flansch montiert und von einem Deckel umgeben ist. Aus der DE 103 44 664 A1 ist eine Vorrichtung zum Abtrennen von Verunreinigungen aus dem Schmieröl einer Brennkraftmaschine insbesondere in einem Kraftfahrzeug bekannt. Die Vorrichtung umfasst einen Filtereinsatz, eine Zentrifuge, ein Zuleitungssystem, ein Ableitungssystem und eine Zwischenwand. Der Filtereinsatz und die Zentrifuge sind in einem durch mindestens einen Deckel verschließbaren Gehäuse übereinander fluchtend angeordnet. Der Filtereinsatz und die Zentrifuge sind bei geöffnetem Gehäuse daraus herausnehmbar. Die Zwischenwand ist zwischen Filtereinsatz und Zentrifuge angeordnet, bei geöffnetem Gehäuse daraus entnehmbar, weist Einrichtungen zur Halterung beziehungsweise Lagerung beziehungsweise Zentrierung des Filtereinsatzes und/oder der Zentrifuge auf und enthält einen Verbindungskanal, der ausgangsseitig mit einem Zentrifugeneingang verbunden ist. Um die Leistungsfähigkeit der Vorrichtung zu verbessern, ist der Verbindungskanal eingangsseitig stromauf des Filtereinsatzes mit dem Zuleitungssystem verbunden.

Aus der FR 2 900 350 A1 ist eine Ölfiltervorrichtung für einen Verbrennungsmotor bekannt, wobei die Vorrichtung einen Filterkörper umfasst, der Mittel zum Befestigen an dem Motor umfasst und angeordnet ist, um einen Zusatzfilter zum Filtern von Öl zu tragen, das in einem Zweigkreislauf zirkuliert, wobei der Filterkörper eine Kammer definiert, die den Filter enthält, und einen Öleinlasskanal zwischen den Mitteln zum Befestigen des Filterkörpers an dem Motor und einem oberen Teil des Filterkörpers definiert.

Aus der EP 1 260 260 A1 ist eine Vorrichtung zum Abscheiden von Verunreinigungen aus einem Schmieröl eines Kraftfahrzeuges bekannt, mit einem durch einen Deckel verschließbaren Gehäuse, in dem ein Ringfilterelement angeordnet ist, mit einem am Gehäuseboden ausgebildeten zentrischen Stutzen, auf den das Ringfilterelement mit einem Ende außen aufgesteckt ist, mit einem rohseitigen Zulauf, mit einem reinseitigen Ablauf und mit einem relativ drucklosen Rücklauf.

Aus der DE 103 44 664 A1 ist eine Vorrichtung zum Abscheiden von Verunreinigungen aus dem Schmieröl eines Kraftfahrzeugs bekannt, mit einem Filtereinsatz, einer mittels durchströmenden Schmieröls antreibbaren Zentrifuge, einem Zulauf für zu reinigendes Schmieröl und einem Ablauf für gereinigtes Schmieröl, wobei der Filtereinsatz und die Zentrifuge in einem Gehäuse angeordnet sind, wobei zwischen dem Filtereinsatz und der Zentrifuge in dem Filtergehäuse eine Zwischenwand angeordnet ist.

Der Erfindung liegt die Aufgabe zugrunde, einen Filter mit einem Zwischendeckel und einem Filtereinsatz der eingangs genannten Art zu gestalten, bei denen insgesamt der Aufwand für Reinfluidleitungen aufseiten des Filtergehäuses verringert werden kann.

### Offenbarung der Erfindung

Diese Aufgabe wird erfindungsgemäß durch den beigefügten Anspruchssatz gelöst.

Erfindungsgemäß ist ein Filter mit einem Zwischendeckel vorgesehen, wobei der Zwischendeckel wenigstens einen Reinfluidkanal wenigstens mit bildet, welcher als fluidtechnische Verbindung zwischen einer Reinfluidseite des wenigstens einen Filtereinsatzes und wenigstens einem Fluidauslass des Filtergehäuses für gereinigtes Reinfluid angeordnet ist oder werden kann.

Erfindungsgemäß wird mithilfe des Zwischendeckels ein Teil des Reinfluidkanals realisiert, mit dem eine Verbindung der Reinfluidseite des wenigstens einen Filtereinsatzes mit dem Fluidauslass des Filtergehäuses realisiert wird. Im Unterschied dazu ist bei der aus dem Stand der Technik bekannten Vorrichtung in dem Filtergehäuse ein separates Ableitungssystem erforderlich, welches sowohl den Fluidausgang aufseiten der Zentrifuge, welcher sich oben am Filtergehäuse befindet, als auch den Fluidausgang aufseiten des Filtereinsatzes, welcher sich unten am Filtergehäuse befindet, mit dem Fluidauslass des Filtergehäuses verbindet. Dieses aus dem Stand der Technik bekannte Ableitungssystem ist entsprechend aufwendig sowohl in Bezug auf die Herstellung als auch auf den benötigten Einbauraum. Mit der Erfindung ist es möglich, dass sowohl der Fluidauslass des wenigstens einen Zentrifugenabscheiders als auch der Fluidauslass des wenigstens einen Filtereinsatzes im Bereich des Zwischendeckels angeordnet werden können. Auf diese Weise kann auf aufwendige Ableitungssysteme im Filtergehäuse verzichtet werden.

Der Zwischendeckel bildet den wenigstens einen Reinfluidkanal wenigstens mit. Vorteilhafterweise kann im Zwischendeckel ein entsprechender Abschnitt des Reinfluidkanals realisiert sein. Dieser Abschnitt des wenigstens einen Reinfluidkanals kann den bevorzugt zentralen Fluidauslass aufseiten des wenigstens einen Filtereinsatzes mit dem Fluidauslass aufseiten des Filtergehäuses verbinden.

Alternativ kann mit dem Zwischendeckel lediglich ein Teil der Wandung eines Abschnitts des wenigstens einen Reinfluidkanals realisiert werden. Ein ergänzender Teil der Wandung des wenigstens einen Reinfluidkanals kann am Filtereinsatz, insbesondere mit einem Endkörper, im Besonderen einer Endscheibe, des wenigstens einen Filtereinsatzes, gebildet werden. Auf diese Weise kann bei der Verbindung des Zwischendeckels mit dem Filtereinsatz der sprechende Abschnitt des Reinfluidkanals vervollständigt werden.

Vorteilhafterweise können der wenigstens eine Filtereinsatz, der Zwischendeckel und der wenigstens eine Zentrifugenabscheider bezüglich der Achse axial angeordnet sein. Auf diese Weise können diese Bauteile übereinander montiert werden. Ferner können so diese Bauteile mittels Dreh- und/oder Steckbewegungen insbesondere um die Achse miteinander verbunden und/oder in dem Filtergehäuse angeordnet werden.

Vorteilhafterweise können der Zwischendeckel und der wenigstens eine Filtereinsatz mittels einer Dreh- und/oder Steckverbindung insbesondere lösbar miteinander verbunden werden. Alternativ oder zusätzlich können der Zwischendeckel und der wenigstens eine Zentrifugenabscheider mittels einer Dreh- und/oder Steckverbindung insbesondere lösbar miteinander verbunden werden.

Bei einer Dreh- und/oder Steckverbindung handelt es sich um eine Verbindung, welche mittels einer Dreh- und/oder Steckbewegung realisiert und gelöst werden kann. Dabei kann es sich um eine Schraubverbindung, eine bajonettverschlussartige Verbindung, eine Rastverbindung, eine Klipsverbindung, eine Schnappverbindung und/oder eine Steckverbindung oder dergleichen handeln. Eine Schraubverbindung wird durch eine kombinierte Dreh- und Steckbewegungen realisiert, wobei durch das Drehen der beteiligten Bauteile relativ zueinander eine Steckbewegung hervorgerufen wird.

Vorteilhafterweise können der wenigstens eine Filtereinsatz und der Zwischendeckel axial in einem Innenraum eines Gehäusetopfs des Filtergehäuses angeordnet sein.

Vorteilhafterweise kann wenigstens ein Zentrifugenabscheider in einem becherförmigen Gehäusedeckel des Filtergehäuses angeordnet sein. Der Gehäusedeckel kann mittels einer dreh- und/oder steckbaren Verbindung mit dem Gehäusetopf verbunden werden.

Vorteilhafterweise kann es sich bei dem wenigstens einen Filtereinsatz um ein sogenanntes Hohlfilterelement handeln.

Ein Hohlfilterelement zeichnet sich dadurch aus, dass es wenigstens einen Elementinnenraum aufweist, welcher von Filtermedium umgeben wird. Das Filtermedium kann von dem zu reinigenden Fluid von außen nach innen zum Elementinnenraum durchströmt werden oder umgekehrt. Der Elementinnenraum verfügt über einen Fluiddurchlass nach außen, durch den, je nach Strömungsrichtung, das gereinigte Fluid den Elementinnenraum verlassen oder zu reinigendes Fluid in diesen gelangen kann. Das Filtermedium kann den Elementinnenraum bezüglich einer Elementachse umfangsmäßig umgeben. An wenigstens einer bezüglich der Elementachse axialen Stirnseite kann das Filtermedium mit einem Endkörper, insbesondere einer Endscheibe, verbunden sein. Wenigstens ein Endkörper kann wenigstens eine Durchlassöffnung für den Elementinnenraum aufweisen.

Bei dem Hohlfilterelement kann es sich vorteilhafterweise um ein so genanntes Rundfilterelement mit einem runden Querschnitt, ein ovales Rundfilterelement mit einem ovalen Querschnitt, ein flach-ovales Rundfilterelement mit einem abgeflachten ovalen Querschnitt, ein konisches Rundfilterelement, bei dem sich der runde Querschnitt in axialer Richtung zu einer Hauptachse verjüngt, ein konisch-ovales Rundfilterelement, bei dem sich der ovale Querschnitt in axialer Richtung zumindest in Richtung einer Querachse verjüngt, ein konisches flach-ovales Rundfilterelement, bei dem sich der flach-ovale Querschnitt in axialer Richtung zumindest in Richtung einer Querachse verjüngt, oder ein Hohlfilterelement mit einem andersartigen, insbesondere einem eckigen, Querschnitt und/oder einem andersartigen axialen Querschnittsverlauf in Richtung einer Elementachse, handeln.

Das Filtermedium kann vorteilhafterweise bezüglich der Elementachse umfangsmäßig geschlossen oder offen sein. Das Filtermedium kann insbesondere sternförmig, bevorzugt zickzackförmig oder wellenförmig, gefaltet oder gebogen sein. Das Filtermedium kann auch ungefaltet oder ungebogen sein.

Der Filter kann vorteilhafterweise Teil einer Brennkraftmaschine sein. Der Filter kann zur Reinigung von Motoröl, Kraftstoff, Hydraulikflüssigkeit, Kühlflüssigkeit, Harnstoff-Wasser-Lösung, Wasser oder anderen flüssigen Fluiden verwendet werden. Der Filter kann auch außerhalb der Kraftfahrzeugtechnik, insbesondere bei Industriemotoren, eingesetzt werden.

Die Erfindung kann bei Kraftfahrzeugen, insbesondere Personenkraftwagen, Lastkraftwagen, Bussen, landwirtschaftlichen und/oder Bau-Fahrzeugen, Bau-/Landmaschinen, Kompressoren, Industriemotoren oder sonstigen Geräten insbesondere mit Verbrennungsmotoren eingesetzt werden. Die Erfindung kann bei Land-, Wasser- und/oder Luftfahrzeugen Verwendung finden.

Bei einer vorteilhaften Ausführungsform kann der Zwischendeckel auf seiner dem wenigstens einen Filtereinsatz zugewandten, bezüglich der Achse axialen Stirnseite wenigstens eine Einlassöffnung für den wenigstens einen Reinfluidkanal aufweisen, welche bei montiertem Zwischendeckel mit wenigstens einer Auslassöffnung für Reinfluid des wenigstens einen Filtereinsatzes korrespondiert. Auf diese Weise kann platzsparend eine direkte Verbindung zwischen der Reinfluidseite des wenigstens einen Filtereinsatzes und dem wenigstens einen Reinfluidkanal im Zwischendeckel realisiert werden.

Bei einer weiteren vorteilhaften Ausführungsform kann der Zwischendeckel an wenigstens einer bezüglich der Achse umfangsmäßigen Umfangsseite wenigstens eine Auslassöffnung des wenigstens einen Reinfluidkanals aufweisen, welche bei montiertem Zwischendeckel mit wenigstens einem Fluidauslass des Filtergehäuses für Reinfluid korrespondiert. Auf diese Weise kann das Reinfluid seitlich aus dem wenigstens einen Zwischendeckel ablaufen. So kann ein Platzbedarf in bezüglich der Achse axialer Richtung verringert werden. Ferner kann so auf entsprechende Verbindungskanäle und Umleitungen für das Reinfluid im Filtergehäuse verzichtet werden.

Bei einer weiteren vorteilhaften Ausführungsform kann sich wenigstens eine Auslassöffnung des wenigstens einen Reinfluidkanals über den gesamten Außenumfang des Zwischendeckels erstrecken. Auf diese Weise kann die wenigstens eine Auslassöffnung in jeder Drehorientierung bezüglich des Filtergehäuses mit dem wenigstens einen Fluidauslass des Filtergehäuses in Verbindung gebracht werden. Auf diese Weise kann eine Montage des Zwischendeckels vereinfacht werden.

Bei einer weiteren vorteilhaften Ausführungsform kann der wenigstens eine Reinfluidkanal als Zwischenraum bezüglich der Achse axial zwischen einem filterseitigen Trennabschnitt und einem zentrifugenseitigen Trennabschnitt des Zwischendeckels realisiert sein. Auf diese Weise kann der wenigstens eine Reinfluidkanal platzsparend im Inneren des Zwischendeckels integriert sein. Der wenigstens eine Reinfluidkanal kann dabei auf einer Seite mit dem filterseitigen Trennabschnitt gegenüber dem Zentrifugenaufnahmeraum und auf der anderen Seite mit dem filterseitigen Trennabschnitt gegenüber dem Filteraufnahmeraum getrennt sein.

Vorteilhafterweise kann der filterseitige Trennabschnitt und/oder der zentrifugenseitige Trennabschnitt als Scheibenabschnitt realisiert sein. Auf diese Weise kann der entsprechende Trennabschnitt in bezüglich der Achse axialer Richtung platzsparend realisiert werden. So kann insgesamt eine axiale Höhe des Filters und Filtergehäuses verringert werden.

Bei einer weiteren vorteilhaften Ausführungsform kann wenigstens ein Rohfluidkanal im Zwischendeckel eine filterseitige Stirnseite des Zwischendeckels mit einer zentrifugenseitigen Stirnseite des Zwischendeckels verbinden. Auf diese Weise kann eine entsprechend kurze Verbindung zwischen den Stirnseiten des Zwischendeckels realisiert werden. So kann ein Bauteilaufwand verringert werden. Für den Fall, dass eine Gehäusevariante ohne Zentrifuge vorhanden ist, kann bei dieser in der hier beschriebenen Anordnung sowohl ein Zwischendeckel mit derartigem Rohfluidkanal als auch ein Zwischendeckel ohne einen solchen Rohfluidkanal verwendet werden.

Der wenigstens eine Rohfluidkanal kann dabei bezüglich seiner Achse etwa parallel zur Achse des Zwischendeckels verlaufen.

Erfindungsgemäß führt ein Rohfluidkanal durch einen den wenigstens einen Reinfluidkanal wenigstens mit bildenden Zwischenraum bezüglich der Achse axial zwischen einem filterseitigen Trennabschnitt und einem zentrifugenseitigen Trennabschnitt des Zwischendeckels, wobei der wenigstens eine Rohfluidkanal in dem Zwischenraum von wenigstens einer Kanalwand umgeben ist. Auf diese Weise können platzsparend in demselben Raumbereich sowohl der wenigstens eine Rohfluidkanal als auch der wenigstens eine Reinfluidkanal realisiert werden. Mit der wenigstens einen Kanalwand wird der wenigstens eine Rohfluidkanal einfach von dem wenigstens einen Reinfluidkanal getrennt. Ferner kann die wenigstens eine Kanalwand als Abstandshalter und/oder mechanische Verbindung zwischen dem filterseitigen Trennabschnitt und dem zentrifugenseitigen Trennabschnitt dienen.

Bei einer weiteren vorteilhaften Ausführungsform kann eine Mehrzahl von Rohfluidkanälen bezüglich der Achse umfangsmäßig verteilt angeordnet sein. Auf diese Weise kann ein Durchflussquerschnitt für das Rohfluid vergrößert werden. Ferner kann so ein gleichmäßiger Fluidstrom ermöglicht werden.

Bei einer weiteren vorteilhaften Ausführungsform kann der Zwischendeckel an seiner bezüglich der Achse radial äußeren Umfangsseite wenigstens eine umfangsmäßig zusammenhängende Dichtung aufweisen. Auf diese Weise kann der Zwischendeckel radial außen gegen wenigstens ein entsprechendes Gehäuseteil des Filtergehäuses und/oder ein Teil des wenigstens einen Zentrifugenabscheiders abgedichtet werden.

Vorteilhafterweise kann mit der wenigstens einen Dichtung der Zwischendeckel gegen eine radial innere Umfangswand eines Gehäusetopfs abgedichtet werden.

Alternativ oder zusätzlich kann mit der wenigstens einen Dichtung der Zwischendeckel gegen ein Halteteil des wenigstens einen Zentrifugenabscheiders abdichten.

Vorteilhafterweise kann wenigstens eine Dichtung so ausgestaltet sein, dass sie sowohl gegen eine radial innere Umfangswand eines Gehäusetopfs, als auch gegen ein Halteteil des wenigstens einen Zentrifugenabscheiders abdichten kann.

Vorteilhafterweise kann wenigstens eine Dichtung so ausgestaltet sein, dass sie sowohl in bezüglich der Achse axialer Richtung, als auch in radialer Richtung dichtend wirkt.

Vorteilhafterweise kann die wenigstens eine Dichtung als sogenannter Halbmonddichtung ausgestaltet sein. Die Halbmonddichtung hat ein etwa halbmondförmiges Profil. Mit einer Halbmonddichtung können mehrere Dichtstellen gleichzeitig radial und axial abgedichtet werden.

Alternativ oder zusätzlich kann wenigstens eine Dichtung so ausgestaltet sein, dass sie ausschließlich in radialer Richtung oder ausschließlich in axialer Richtung dichtend wirkt.

Bei einer weiteren vorteilhaften Ausführungsform kann der Zwischendeckel an seiner bezüglich der Achse radial äußeren Umfangsseite zwei jeweils umfangsmäßig zusammenhängende Dichtungen aufweisen, welche axial zueinander beabstandet sind, wobei axial zwischen den Dichtungen wenigstens eine Auslassöffnung des wenigstens einen Reinfluidkanals aus der Umfangsseite des Zwischendeckels führt. Auf diese Weise kann die wenigstens eine Auslassöffnung sowohl gegenüber dem Zentrifugenaufnahmeraum als auch gegenüber dem Filteraufnahmeraum abgedichtet werden. Zusätzlich kann die Rohfluidseite gegen die Reinfluidseite abgedichtet werden. Außerdem kann gegenüber der Umgebung abgedichtet werden.

Bei einer weiteren vorteilhaften Ausführungsform kann der Zwischendeckel auf seiner zentrifugenseitigen Stirnseite wenigstens eine Zentrifugen-Zentriereinrichtung zum Halten an wenigstens einem Teil des wenigstens einen Zentrifugenabscheiders und/oder auf seiner filterseitigen Stirnseite wenigstens eine Filter-Zentriereinrichtung zum Halten an dem wenigstens einen Filtereinsatz aufweisen. Mit der Zentrifugen-Zentriereinrichtung können der wenigstens eine Zentrifugenabscheider und der Zwischendeckel zueinander zentriert und/oder im Abstand gehalten werden. Zusätzlich kann die Zentrifugen-Zentriereinrichtung auch eine Haltefunktion aufweisen, sodass die beteiligten Bauteile aneinander fixiert werden können. Entsprechend kann die wenigstens eine Filter-Zentriereinrichtung zum Zentrieren und/oder Abstand halten des wenigstens einen Filtereinsatzes relativ zum Zwischendeckel dienen. Zusätzlich kann die Filter-Zentriereinrichtung auch eine Haltefunktion zum Fixieren des wenigstens einen Filtereinsatzes an dem Zwischendeckel aufweisen.

Vorteilhafterweise kann die wenigstens eine Zentrifugen-Zentriereinrichtung und/oder die wenigstens eine Filter-Zentriereinrichtung als Schnellverbindung, insbesondere Rastverbindung, Schnappverbindung, Klipsverbindung, Steckverbindung oder dergleichen ausgestaltet sein. Auf diese Weise können die Zentriereinrichtungen einfach und schnell verbunden und gegebenenfalls gelöst werden.

Bei einer weiteren vorteilhaften Ausführungsform kann der Zwischendeckel auf seiner zentrifugenseitigen Stirnseite und/oder auf seiner filterseitigen Stirnseite becherförmig ausgestaltet sein. Auf diese Weise kann der Zwischendeckel auf der entsprechenden Stirnseite zusätzlich zur Aufnahme von einem entsprechenden Bauteil, insbesondere einem Halteteil des wenigstens einen Zentrifugenabscheiders oder eines Endkörpers des wenigstens einen Filtereinsatzes, dienen. Die Umfangswand der becherförmigen Stirnseite des Zwischendeckels kann die entsprechenden beteiligten Bauteile des wenigstens einen Zentrifugenabscheiders und/oder des wenigstens einen Filtereinsatzes umgeben. Insgesamt kann so die mechanische Stabilität des Zwischendeckels vergrößert werden.

Die Aufgabe wird ferner bei dem Filtereinsatz erfindungsgemäß dadurch gelöst, dass der Filtereinsatz auf einer bezüglich der Achse axialen Stirnseite, auf der sich die Verbindungseinrichtung befindet, wenigstens eine Auslassöffnung für gereinigtes Reinfluid aufweist, welche mit wenigstens einer Einlassöffnung wenigstens eines Reinfluidkanals des Zwischendeckels in Korrespondenz gebracht werden kann, wobei die wenigstens eine Auslassöffnung die Verbindungseinrichtung wenigstens mit bildet.

Erfindungsgemäß ist Auslassöffnung des Filtereinsatzes für Reinfluid auf der dem Zentrifugenabscheider zugewandten Seite angeordnet. So kann auf entsprechende Reinfluidkanäle im Filtergehäuse auf der dem wenigstens einen Zentrifugenabscheider axial abgewandten Stirnseite verzichtet werden. Der Fluidauslass des Filtergehäuses kann so zwischen dem Filteraufnahmeraum und dem Zentrifugenaufnahmeraum etwa auf Höhe des Zwischendeckels realisiert sein. So können die Reinfluidkanäle im Filtergehäuse insgesamt kürzer gestaltet sein.

Vorteilhafterweise kann der Filtereinsatz auf der Stirnseite, welche der Auslassöffnung des Filtereinsatzes bezüglich der Achse axial abgewandt ist, eine Aufnahme für ein Umgehungsventil aufweisen. Durch das Umgehungsventil kann das Rohfluid das Filtermedium des Filtereinsatzes umgehen und direkt zur Reinfluidseite geleitet werden. Hierzu kann das Umgehungsventil ab einem vorgebbaren Differenzdruck geöffnet werden. Dieser Differenzdruck kann insbesondere erreicht werden, falls das Filtermedium blockiert ist oder der Durchfluss in einer anderen Weise behindert wird. Auf diese Weise kann stets ein Fluiddurchlass durch den Filter erfolgen. So kann die Betriebssicherheit einer Maschine, in deren Fluidkreislauf sich der Filter befindet, gewährleistet werden.

Vorteilhafterweise kann das Umgehungsventil auf Seiten des Filtergehäuses befestigt sein. Beim Einbau des Filtereinsatzes kann das Umgehungsventil automatisch in die entsprechende Aufnahme eingeführt werden.

Vorteilhafterweise kann die Verbindungseinrichtung des Filtereinsatzes wenigstens einen Teil einer Zentriereinrichtung aufweisen. Mit der Zentriereinrichtung kann der Filtereinsatz bezüglich des Zwischendeckels zentriert werden.

Vorteilhafterweise kann eine radiale Abmessung des Filtereinsatzes auf seiner dem Zwischendeckel zugewandten Seite, insbesondere die radiale Abmessung eines Endkörpers, deutlich kleiner sein, als die radial innere Abmessung eines becherförmigen Teils des Zwischendeckels, welcher den Filtereinsatz wenigstens teilweise aufnehmen kann. Auf diese Weise kann zwischen der radial äußeren Umfangsseite des Filtereinsatzes und der radial inneren Umfangsseite des becherförmigen Teils des Zwischendeckels ein Fluiddurchlass realisiert werden.

Vorteilhafterweise kann zwischen dem Zwischendeckel und der ihm zugewandten Stirnseite des Filtereinsatzes wenigstens ein Abstandshalter realisiert sein. Auf diese Weise kann die Stirnseite des Filtereinsatzes, insbesondere die Endscheibe, zu der Stirnseite des Zwischendeckels in einem Abstand gehalten werden. So kann zwischen dem Filtereinsatz der Stirnseite des Zwischendeckels ein stirnseitiger Fluiddurchfluss realisiert werden.

Vorteilhafterweise kann wenigstens ein Abstandshalter an der Stirnseite des Zwischendeckels realisiert sein. Auf diese Weise kann aufseiten des Filtereinsatzes eine übliche Endscheibe verwendet werden.

Alternativ oder zusätzlich kann wenigstens ein Abstandshalter an einem Endkörper des Filtereinsatzes realisiert sein.

Bei einer vorteilhaften Ausführungsform kann der Filtereinsatz wenigstens einen Teil einer Dichteinrichtung aufweisen, mit welcher die wenigstes eine Auslassöffnung gegenüber dem Zwischendeckel abgedichtet werden kann. Bei der Dichteinrichtung kann es sich vorteilhafterweise um eine bezüglich der Achse umfangsmäßig zusammenhängende Dichtung oder Dichtfläche handeln. Mittels der Dichteinrichtung kann die Rohfluidseite des Filtereinsatzes von der Reinfluidseite getrennt werden.

Bei einer weiteren vorteilhaften Ausführungsform kann der Filtereinsatz auf seiner der Verbindungseinrichtung axial abgewandten Stirnseite wenigstens einen Teil einer Betätigungseinrichtung für einen Fluidablauf des Filtergehäuses aufweisen. Durch den Fluidablauf kann in dem Filtergehäuse enthaltenes Fluid bei einer Entnahme des Filtereinsatzes abgelassen werden. So kann verhindert werden, dass bei einem Austausch des Filtereinsatzes Fluid ungewollt in die Umgebung gelangt. Beim Ausbau des Filtereinsatzes kann der Fluidablauf mit der Betätigungseinrichtung automatisch freigegeben werden, sodass das Fluid ablaufen kann. Umgekehrt kann beim Einbau des Filtereinsatzes mithilfe der Betätigungseinrichtung der Fluidablauf automatisch verschlossen werden.

Vorteilhafterweise kann der Filtereinsatz den Zwischendeckel umfassen, insbesondere mit diesem lösbar oder unlösbar verbunden sein, beispielsweise können die Teile durch Stecken reibschlüssig, durch eine Rastverbindung und/oder durch eine Klebeverbindung miteinander verbunden sein. Dadurch kann der Austausch des Filterelementes vereinfacht werden. Eine derartige Vereinfachung kann auch erreicht werden durch eine erfindungsgemäße Liefereinheit, die einen erfindungsgemäßen Filtereinsatz und einen erfindungsgemäßen Zwischendeckel zum Einbau in ein Filtergehäuse für Servicezwecke umfasst.

Vorteilhafterweise kann die axiale Länge des Filtereinsatzes so ausgestaltet sein, dass bei korrekt eingebautem Filtereinsatz der Fluidablauf mit der Betätigungseinrichtung schließend betätigt wird.

Ferner betrifft die Erfindung eine Filtervorrichtung umfassend ein Filtergehäuse sowie einen austauschbaren erfindungsgemäßen Filtereinsatz und einen erfindungsgemäßen Zwischendeckel sowie die Verwendung des Filtereinsatzes und/oder des Zwischendeckels in einem Filtergehäuse.

Vorteilhaft umfasst der Filter ein Filtergehäuse mit einem Gehäusetopf, welcher mit einem abnehmbaren Gehäusedeckel verschlossen ist. Sowohl der Gehäusetopf als auch der Gehäusedeckel sind bevorzugt becherförmig ausgestaltet. Der Gehäusedeckel ist bevorzugt mittels einer Schraubverbindung bezüglich einer gedachten Achse schraubbar verbunden. Bevorzugt weisen der Gehäusedeckel hierzu bevorzugt ein Außengewinde und der Gehäusetopf ein entsprechendes Innengewinde auf.

**In** dem Filtergehäuse befinden sich bevorzugt ein Filteraufnahmeraum für einen Filtereinsatz und ein Zentrifugenaufnahmeraum für einen Zentrifugenabscheider. Der Filteraufnahmeraum und der Zentrifugenaufnahmeraum sind jeweils beispielhaft koaxial kreiszylindrisch. Der Filteraufnahmeraum und der Zentrifugenaufnahmeraum sind bevorzugt durch einen erfindungsgemäßen Zwischendeckel voneinander getrennt. Der Filteraufnahmeraum befindet sich in der normalen Einbauposition des Filters bevorzugt unten im Gehäusetopf. Der Zentrifugenaufnahmeraum befindet sich ferner bevorzugt räumlich über dem Filteraufnahmeraum und weiter bevorzugt zum Teil im Gehäusedeckel und zum anderen Teil innerhalb des Gehäusetopfes. Der Zwischendeckel ist beispielhaft unterhalb des freien Randes des Gehäusedeckels in das Innengewinde des Gehäusetopfs eingeschraubt. Der Zwischendeckel befindet sich so axial zwischen dem Filteraufnahmeraum und dem Zentrifugenaufnahmeraum.

Das Filtergehäuse verfügt über einen Fluideinlass für zu reinigendes Fluid. Der Fluideinlass führt bevorzugt durch den Boden des Gehäusetopfs in den Filteraufnahmeraum.

Im Übrigen gelten die im Zusammenhang mit dem erfindungsgemäßen Zwischendeckel und dem erfindungsgemäßen Filtereinsatz und deren jeweiligen vorteilhaften Ausgestaltungen aufgezeigten Merkmale und Vorteile untereinander entsprechend und umgekehrt. Die einzelnen Merkmale und Vorteile können selbstverständlich untereinander kombiniert werden, wobei sich weitere vorteilhafte Wirkungen einstellen können, die über die Summe der Einzelwirkungen hinausgehen.

### Kurze Beschreibung der Zeichnungen

Weitere Vorteile, Merkmale und Einzelheiten der Erfindung ergeben sich aus der nachfolgenden Beschreibung, in der ein Ausführungsbeispiel der Erfindung anhand der Zeichnung näher erläutert wird. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen schematisch
- Figur 1: einen Längsschnitt eines Filters zur Reinigung von Flüssigkeit, mit einem Filtereinsatz und einem Zentrifugenabscheider, zwischen denen ein Zwischendeckel angeordnet ist;
- Figur 2: einen Ausschnitt eines Längsschnitts des Filters aus der Figur 1 entlang einer anderen Schnittebene;
- Figur 3: einen weiteren Ausschnitt eines Längsschnitts des Filters aus den Figuren 1 und 2 entlang einer weiteren Schnittebene;
- Figur 4: einen Ausschnitt des Längsschnittes aus der Figur 3 im Bereich einer zentrifugenseitigen Dichtung zwischen dem Zwischendeckel und dem Filtergehäuse;
- Figur 5: einen Längsschnitt des Filtereinsatzes des Filters aus den Figuren 1 bis 3 mit dem Zwischendeckel;
- Figur 6: einen isometrischen Teilschnitt des Filtereinsatzes mit dem Zwischendeckel des Filters aus den Figuren 1 bis 3;
- Figur 7: einen Längsschnitt des Filters aus den Figuren 1 bis 3 entlang einer ande- ren Schnittebene, wobei hier ein Fluidablauf zum Ablassen von Fluid im Bo- den des Filtergehäuses gezeigt ist.

In den Figuren sind gleiche Bauteile mit gleichen Bezugszeichen versehen.

### Ausführungsform(en) der Erfindung

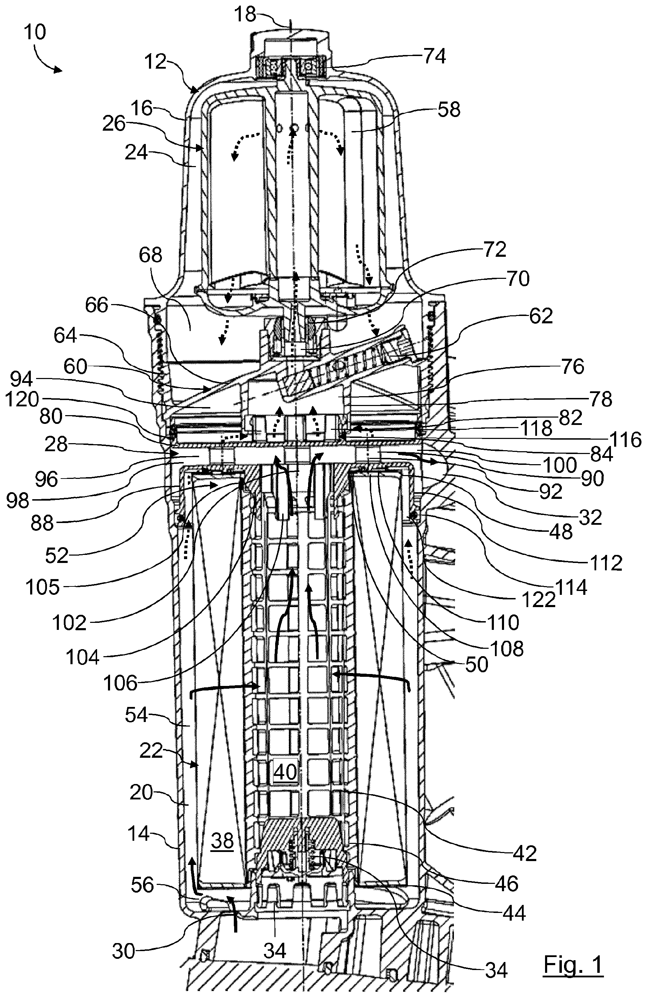

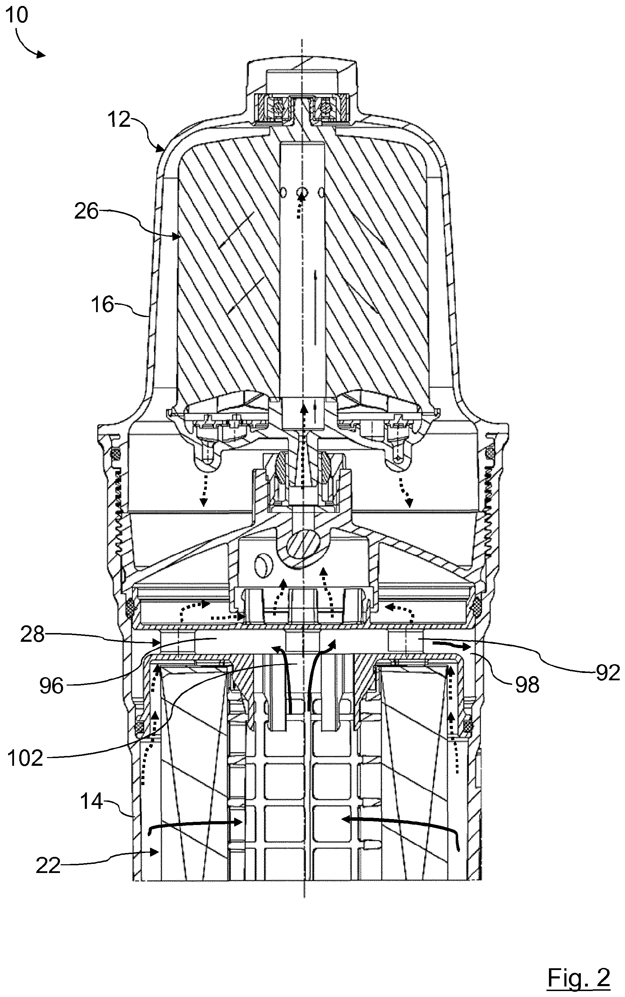

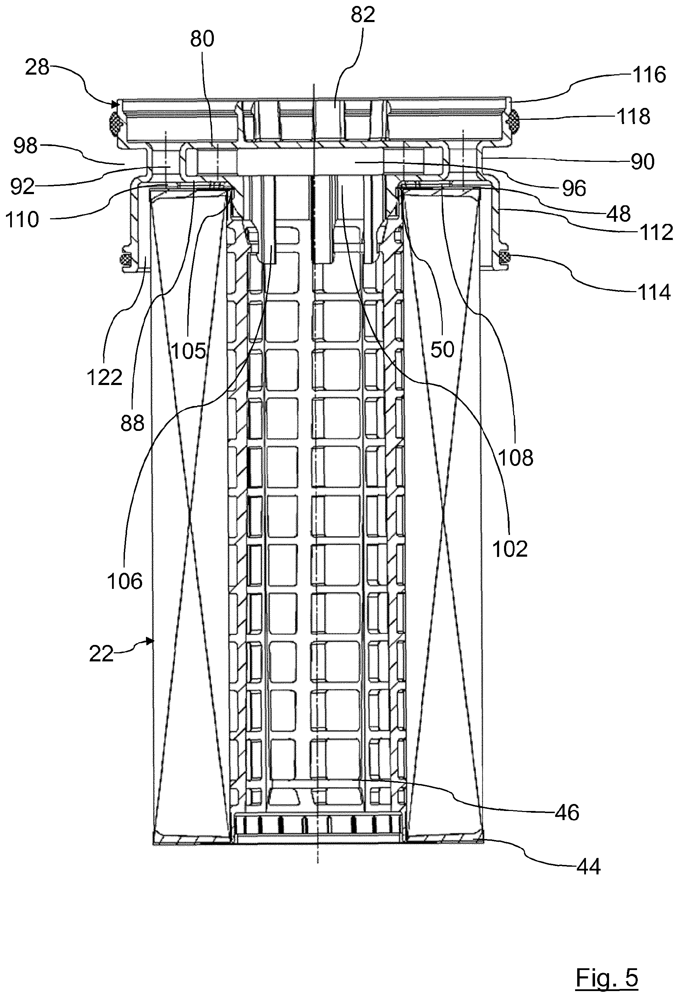

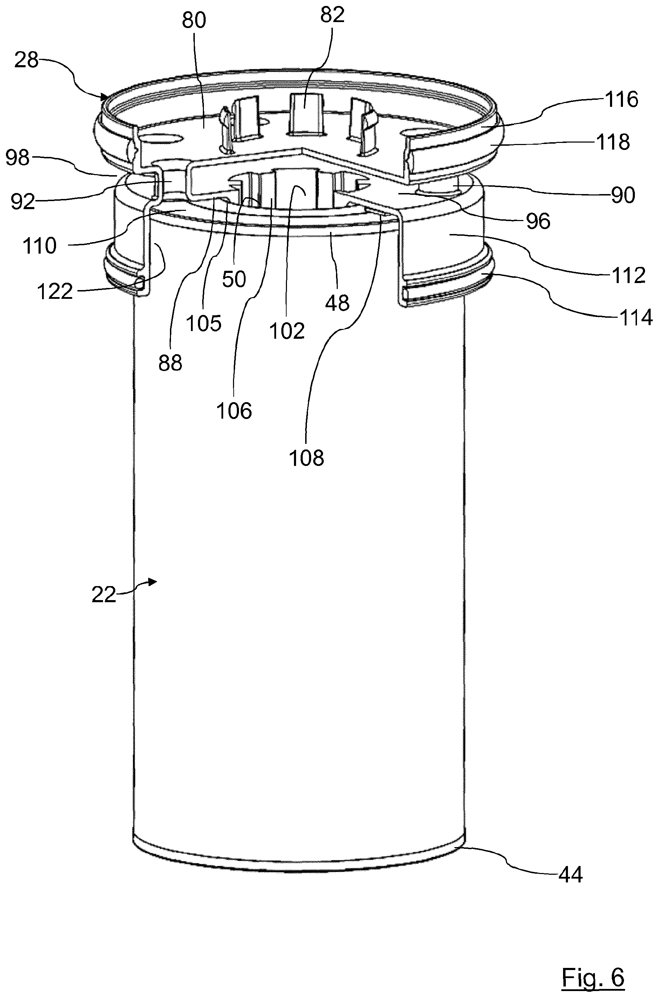

In den Figuren 1 bis 7 ist ein Filter 10 zur Reinigung von flüssigem Fluid in unterschiedli- chen Schnitten und Detailansichten gezeigt.

Mit dem Filter 10 können flüssige Fluide, beispielsweise Motoröl, Kraftstoff, Wasser, Harnstoff-Wasser-Lösung, Hydraulikflüssigkeit oder dergleichen, von Partikeln befreit werden. Der Filter 10 kann hierzu in einer entsprechenden Flüssigkeitsleitung beispiels- weise einer Brennkraftmaschine angeordnet sein.

Wenn im Folgenden von "Rohfluid" die Rede ist, so ist damit im Sinne der Erfindung mit dem Filter 10 zu reinigendes Fluid gemeint. "Reinfluid" meint mit dem Filter 10 gereinigtes Fluid. Die Rohfluidseite ist demnach die Seite, auf der sich zu reinigendes Fluid befindet. Die Reinfluidseite ist die Seite, auf der sich gereinigtes Fluid befindet.

Der Filter 10 umfasst ein Filtergehäuse 12 mit einem Gehäusetopf 14, welcher mit einem abnehmbaren Gehäusedeckel 16 verschlossen ist. Sowohl der Gehäusetopf 14 als auch der Gehäusedeckel 16 sind becherförmig ausgestaltet. Der Gehäusedeckel 16 ist mittels einer Schraubverbindung bezüglich einer gedachten Achse 18 schraubbar verbunden. Der Gehäusedeckel 16 weist hierzu ein Außengewinde und der Gehäusetopf 14 ein ent- sprechendes Innengewinde auf.

Wenn im Folgenden von "axial", "radial", "umfangsmäßig", "koaxial" oder dergleichen die Rede ist, so bezieht sich dies, sofern nicht anders erwähnt, auf die Achse 18.

In dem Filtergehäuse 12 befinden sich ein Filteraufnahmeraum 20 für einen Filtereinsatz 22 und ein Zentrifugenaufnahmeraum 24 für einen Zentrifugenabscheider 26. Der Fil- teraufnahmeraum 20 und der Zentrifugenaufnahmeraum 24 sind jeweils beispielhaft ko- axial kreiszylindrisch. Der Filteraufnahmeraum 20 und der Zentrifugenaufnahmeraum 24 sind durch einen Zwischendeckel 28 voneinander getrennt. Der Filteraufnahmeraum 20 befindet sich in der normalen Einbauposition des Filters 10, wie sie in der Figur 1 gezeigt ist, unten im Gehäusetopf 14. Der Zentrifugenaufnahmeraum 24 befindet sich räumlich über dem Filteraufnahmeraum 20 zum Teil im Gehäusedeckel 16. Der Zwischendeckel 28 ist beispielhaft unterhalb des freien Randes des Gehäusedeckels 16 in das Innengewinde des Gehäusetopfs 14 eingeschraubt. Der Zwischendeckel 28 befindet sich so axial zwischen dem Filteraufnahmeraum 20 und dem Zentrifugenaufnahmeraum 24.

Das Filtergehäuse 12 verfügt über einen Fluideinlass 30 für zu reinigendes Fluid. Der Fluideinlass 30 führt durch den Boden des Gehäusetopfs 14 in den Filteraufnahmeraum 20.

Ein Fluidauslass 32 für gereinigtes Fluid führt durch die Umfangsseite des Gehäusetopfs 14. Der Fluidauslass 32 befindet sich etwa auf Höhe des Zwischendeckels 28 in einem Bereich zwischen dem Filteraufnahmeraum 20 und dem Zentrifugenaufnahmeraum 24.

Die mit dem Gehäusedeckel 16 verschließbare Öffnung des Gehäusetopfs 14 dient als Einbauöffnung für den Filtereinsatz 22, den Zwischendeckel 28 und eine Halteeinheit 60 des Zentrifugenabscheiders 26.

Durch den Boden des Gehäusetopfs 14 führt darüber hinaus mittig ein Umgehungskanal 34, in dem ein Umgehungsventil 36 angeordnet ist. Das Umgehungsventil 36 erstreckt sich axial in den Filteraufnahmeraum 20. Der Umgehungskanal 34 verbindet direkt die Rohfluidseite des Filtereinsatzes 22 mit seiner Reinfluidseite. Das Umgehungsventil 36 gibt den Umgehungskanal 34 frei, sobald ein entsprechender Druckunterschied zwischen der Eingangsseite und der Ausgangsseite des Umgehungsventils 36 vorliegt. Dies kann beispielsweise der Fall sein, wenn ein Fluiddurchfluss durch den Filtereinsatz 22 blockiert ist. Auf diese Weise kann ein Fluiddurchfluss durch den Filter 10 weiter sichergestellt werden.

Bei dem Filtereinsatz 22 handelt es sich beispielhaft um ein sogenanntes Rundfilterelement. Der Filtereinsatz 22 weist ein Filtermedium 38, beispielsweise Filtervlies oder Filterpapier, auf. Das Filtermedium 38 und gibt die Achse 18 umfangsmäßig zusammenhängend und begrenzt einen Einsatzinnenraum 40 des Filtereinsatzes 22 umfangsmäßig. Im Einsatzinnenraum 40 ist ein gitterartiges Stützrohr 42 angeordnet, welches sich zwischen den axialen Stirnseiten des Filtereinsatzes 22 erstreckt. Das Stützrohr 42 ist an beiden Stirnseiten offen. Die Umfangswand des Stützrohrs 42 ist für Flüssigkeit durchlässig.

Auf der dem Boden des Gehäusetopfs 14 zugewandten Stirnseite des Filtereinsatzes 22 ist eine einlassseitige Endscheibe 44 angeordnet, welche dicht mit dem Filtermedium 38 verbunden ist. Die einlassseitige Endscheibe 44 weist eine koaxiale Öffnung auf, durch welche das Umgehungsventil 36 führt. Die Öffnung und der dortige Bereich des Stützrohrs 42 bilden eine Aufnahme 46 für das Umgehungsventil 36.

Auf der dem Gehäusedeckel 16 zugewandten zentrifugenseitigen Stirnseite ist eine zentrifugenseitige Endscheibe 48 dicht mit dem Filtermedium 38 verbunden. Die zentrifugenseitige Endscheibe 48 weist eine zentrale Auslassöffnung 50 für gereinigtes Fluid auf. Die Auslassöffnung 50 und der dortige Bereich des Stützrohrs 42 gehören zu einer Verbindungseinrichtung 52, mit welcher der Filtereinsatz 22 mit dem Zwischendeckel 28 verbunden ist.

Der Außendurchmesser des Filtereinsatzes 22, im Besonderen die Außendurchmesser der Endscheiben 44 und 48, sind deutlich kleiner als ein Innendurchmesser des Gehäusetopfs 14. Auf diese Weise wird zwischen der radial äußeren Umfangsseite des Filtereinsatzes 22 und der radial inneren Umfangsseite des Gehäusetopfs 14 ein fluidführender Ringraum 54 auf der Rohfluidseite des Filtereinsatzes 22 gebildet.

Ferner wird die einlassseitige Endscheibe 44 in einem axialen Abstand zum Boden des Gehäusetopfs 14 gehalten, sodass zwischen der einlassseitigen Endscheibe 44 und dem Boden des Gehäusetopfs 14 ein stirnseitiger Einlassraum 56 für zu reinigendes Fluid entsteht. In den Einlassraum 56 mündet der Fluideinlass 30.

Der Zentrifugenabscheider 26 umfasst die Halteeinheit 60, einen Rotor 58 und ein Bypassventil 62.

Die Halteeinheit 60 weist einen kreiszylindrischen koaxialen Befestigungsabschnitt 64 mit einem Außengewinde und einen Zentralabschnitt 66 auf. Der Zentralabschnitt 66 befindet sich radial innerhalb des Befestigungsabschnitts 64 und ist einstückig mit diesem verbunden.

Mit dem Außengewinde des Befestigungsabschnitts 64 ist die Halteeinheit 60 in das Innengewinde im Bereich der Einbauöffnung des Gehäusetopfs 14 eingeschraubt.

Der Zentralabschnitt 66 bildet eine Trennwand zwischen einem Zentrifugenauslassraum 68 und dem Zwischendeckel 28. Der Zentralabschnitt 66 ist von dem Gehäusedeckel 16 aus betrachtet konvex gewölbt. Der Zentralabschnitt 66 weist einen koaxialen Zentrifugeneinlass 70 für zu reinigendes Fluid auf.

An den Zentrifugeneinlass 70 schließt sich auf der dem Zwischendeckel 28 abgewandten Seite eine untere Lagerung 72 für den Rotor 58 an. Eine entsprechende obere Lagerung 74 für den Rotor 58 ist oben im Boden des Gehäusedeckels 16 angeordnet. In der unteren Lagerung 72 und der oberen Lagerung 74 ist der Rotor 58 um die Achse 18 drehbar gelagert.

In dem Zentralabschnitt 66 ist ferner das Bypassventil 62 angeordnet. Mit dem Bypassventil 62 kann bei Überschreiten eines vorgebbaren Druckunterschieds eine direkte Verbindung zwischen einem Zwischenraum 76 auf der Einlassseite des Zentrifugenabscheiders 26 und dem Zentrifugenauslassraum 68 hergestellt werden. Auf diese Weise kann das Fluid den Zentrifugenabscheider 26 umgehen, falls eine Fluiddurchführung durch den Zentrifugenabscheider 26 beispielsweise aufgrund von Verschmutzungen blockiert ist.

Auf der dem Rotor 58 axial abgewandten Seite des Zentralabschnitts 66 ist ein koaxialer Haltezylinder 78 angeordnet. Der Haltezylinder 78 ist einstückig mit dem Zentralabschnitt 66 verbunden. Der Haltezylinder 78 umgibt den Zentrifugeneinlass 70 und den Zwischenraum 76 umfangsmäßig zusammenhängend. Der Haltezylinder 78 erstreckt sich axial in Richtung auf den Zwischendeckel 28 zu und endet kurz vor einem zentrifugenseitigen Trennabschnitt 80 des Zwischendeckels 28. Durch den Abstand zwischen dem freien Rand des Haltezylinders 78 und dem zentrifugenseitigen Trennabschnitt 80 wird ein umfangsmäßiger Durchtrittsspalt für das Fluid realisiert.

An der radial inneren Umfangsseite weist der Haltezylinder 78 eine umfangsmäßige Rastnut auf, in welcher entsprechende Rasthaken 82 einer Halteeinrichtung 84 des Zwischendeckels 28 einrasten können.

Der Zwischendeckel 28 umfasst den zentrifugenseitigen Trennabschnitt 80 auf der dem Zentrifugenabscheider 26 axial zugewandten Stirnseite und einen filterseitigen Trennabschnitt 88 auf der dem Filtereinsatz 22 axial zugewandten Seite. Die Trennabschnitte 80 und 88 sind jeweils als Scheibenabschnitte ausgestaltet. Die Trennabschnitte 80 und 88 verlaufen beispielhaft axial beabstandet parallel zueinander.

Die Trennabschnitte 80 und 88 sind mittels einer Mehrzahl von hohlen Zylinderabschnitten 90, einstückig miteinander verbunden. Die gedachten Achsen der Zylinderabschnitte 90 verlaufen beispielhaft parallel zur Achse 18. Die Innenräume der Zylinderabschnitte 90 bilden jeweils einen Rohfluidkanal 92. Die Zylinderabschnitte 90 und damit die Rohfluidkanäle 92 sind umfangsmäßig verteilt angeordnet. Die Rohfluidkanäle 92 verbinden die Rohfluidseite des Filtereinsatzes 22 mit einem Zentrifugeneinlassraum 94.

Der Zentrifugeneinlassraum 94 umgibt den Haltezylinder 78 der Halteeinheit 60 des Zentrifugenabscheiders 26 umfangsmäßig. Der Zentrifugeneinlassraum 94 ist über den Durchlassspalt zwischen dem Haltezylinder 78 und dem zentrifugenseitigen Trennabschnitt 80 mit dem Zwischenraum 76 und über diesen mit dem Zentrifugeneinlass 70 verbunden.

Ein Zwischenraum zwischen den Trennabschnitten 80 und 88 bildet insgesamt einen Reinfluidkanal 96. Der Reinfluidkanal 96 ist radial außen umfangsmäßig zusammenhängend offen und bildet dort eine Auslassöffnung 98. Die Zylinderabschnitte 90 mit den Rohfluidkanälen 92 führen durch den Zwischenraum, welcher den Reinfluidkanal 96 bildet. Dabei sind die Rohfluidkanäle 96 mit den Wänden der Zylinderabschnitte 90 von dem Reinfluidkanal 96 getrennt.

Bei montiertem Zwischendeckel 28 korrespondiert die Auslassöffnung 98 mit einem Auslassringraum 100. Durch die umfangsmäßig durchgängig offene Auslassöffnung 98 entsteht die Verbindung zu dem Auslassringraum 100 unabhängig von der Drehorientierung des Filtereinsatzes 22 relativ zum Filtergehäuse 12. Der Auslassringraum 100 umgibt den Zwischendeckel 28 umfangsmäßig und ist mit dem Fluidauslass 32 verbunden. Auf diese Weise korrespondiert die Auslassöffnung 98 mit dem Fluidauslass 32.

Der filterseitige Trennabschnitt 88 weist darüber hinaus eine zentrale Einlassöffnung 102 für gereinigtes Fluid auf. Die Einlassöffnung 102 mündet in den Reinfluidkanal 96.

Auf der dem zentrifugenseitigen Trennabschnitt 80 axial abgewandten Seite des filterseitigen Trennabschnitts 88 erstreckt sich eine Filter-Zentriereinrichtung 104 in Form eines Hohlzylinders in axialer Richtung. Die Filter-Zentriereinrichtung 104 ist auf ihrer dem filterseitigen Trennabschnitt 88 zugewandten Seite umfangsmäßig geschlossen.

Die radial äußere Umfangsseite der Filter-Zentriereinrichtung 104 verfügt über eine umfangsmäßig zusammenhängende Dichteinrichtung 105, mit welcher gegenüber einer radial inneren Umfangsseite der zentrifugenseitigen Endscheibe 48 abgedichtet wird. So wird die Auslassöffnung 50 gegenüber dem Zwischendeckel 28 abgedichtet. Die Dichteinrichtung 105 trennt die Rohfluidseite von der Reinfluidseite.

Auf der dem filterseitigen Trennabschnitt 88 axial abgewandten Seite weist die Filter-Zentriereinrichtung 104 eine Mehrzahl von umfangsmäßig verteilten Rastarmen 106 auf. Die Rastarme 106 können mit dem Stützrohr 42 des Filtereinsatzes 22 verrasten und so diesen bezüglich dem Zwischendeckel 28 zentrieren. Dabei bilden die Auslassöffnung 50 und/oder das Stützrohr 42 eine Verbindungseinrichtung auf Seiten des Filtereinsatzes 22 zur Verbindung mit dem Zwischendeckel 28.

Ferner ist auf der dem zentrifugenseitigen Trennabschnitt 80 axial abgewandten Stirnseite des filterseitigen Trennabschnitts 88 eine Mehrzahl von Abstandshaltern 108 umfangsmäßig verteilt angeordnet. Die Abstandshalter 108 erstrecken sich jeweils in axialer Richtung. Mit den Abstandshaltern 108 wird ein axialer Abstand zwischen dem filterseitigen Trennabschnitt 88 und der zentrifugenseitigen Endscheibe 48 des Filtereinsatzes 22 vorgegeben. Zwischen dem filterseitigen Trennabschnitt 88 und der zentrifugenseitigen Endscheibe 48 wird so ein stirnseitiger Rohfluidraum 110 realisiert. Aus dem Rohfluidraum 110 führen die Rohfluidkanäle 92 heraus.

Am radial äußeren Rand geht der filterseitige Trennabschnitt 88 einstückig in einen filterseitigen Zylinderabschnitt 112 über. Der Zylinderabschnitt 112 umgibt den dem Zwischendeckel 28 axial zugewandten Teil des Filtereinsatzes 22. Der filterseitige Trennabschnitt 88 mit dem filterseitigen Zylinderabschnitt 112 hat insgesamt eine Becherform.

Im Bereich des freien Randes des filterseitigen Zylinderabschnitts 112 ist radial außen eine Dichtungsnut mit einer umfangsmäßig zusammenhängenden Ringdichtung 114 vorgesehen.

Der zentrifugenseitige Trennabschnitt 80 weist auf seiner dem filterseitigen Trennabschnitt 88 axial abgewandten Seite die Rasthaken 82 auf. Die Rasthaken 82 sind umfangsmäßig verteilt und erstrecken sich jeweils in axialer Richtung.

Der umfangsseitige Rand des zentrifugenseitigen Trennabschnitts 80 geht einstückig in einen zentrifugenseitigen Zylinderabschnitt 116 über. Der zentrifugenseitige Zylinderabschnitt 116 erstreckt sich in axialer Richtung von dem filterseitigen Trennabschnitt 88 weg. Insgesamt haben der zentrifugenseitige Zylinderabschnitt 116 und der zentrifugenseitige Trennabschnitt 80 eine Becherform.

An der radial äußeren Umfangsseite ist an dem zentrifugenseitigen Zylinderabschnitt 116 eine umfangsmäßig zusammenhängende Halbmonddichtung 118 angeordnet. Die Halbmonddichtung 118 hat im Profil etwa die Form eines Halbmondes.

Bei montiertem Filter 10 dichtet die Ringdichtung 114 in radialer Richtung gegen die radial innere Umfangsseite der Umfangswand des Gehäusetopfs 14 ab. Die Ringdichtung 114 befindet sich auf der der Einbauöffnung des Gehäusetopfs 14 axial abgewandten Seite des Fluidauslasses 32. Somit dichtet die Ringdichtung 114 die Rohfluidseite des Filtereinsatzes 22 gegen die Reinfluidseite ab.

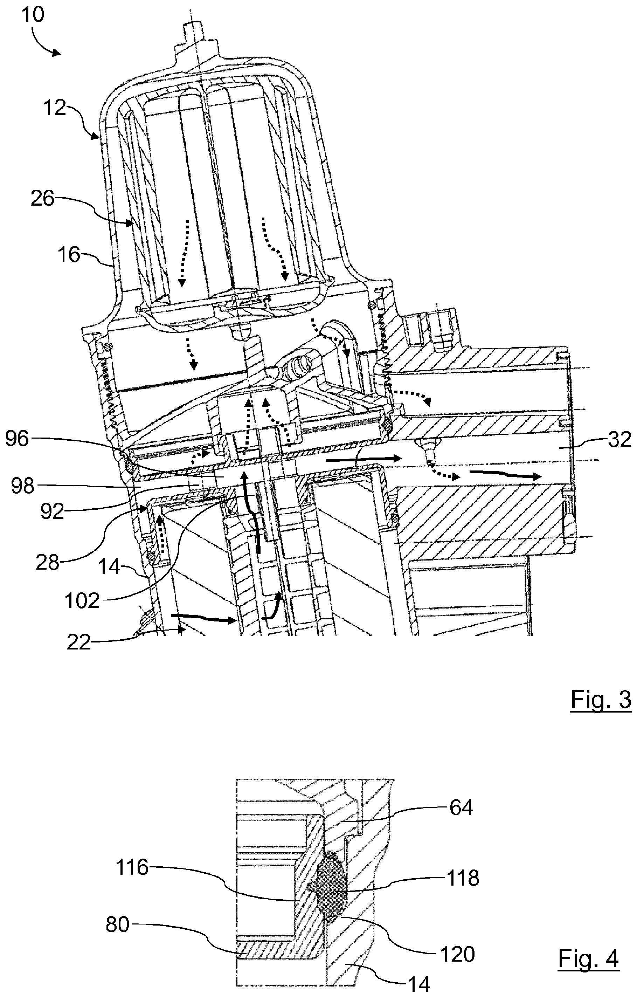

Die Halbmonddichtung 118 ist in der Figur 4 im Detail gezeigt. Bei montiertem Filter 10 befindet sich die Halbmonddichtung 118 in einem Bereich zwischen dem Befestigungsabschnitt 64 der Halteeinheit 60 des Zentrifugenabscheiders 26 und der radial inneren Umfangsseite des Gehäusetopfs 14. Dabei wirkt die Halbmonddichtung 118 sowohl in radialer Richtung als auch in axialer Richtung dichtend. Durch die axiale Verpressung zwischen dem axial stirnseitigen Rand des Befestigungsabschnitts 64 und einer Stufe 120 aufseiten des Gehäusetopfs 14 wird einerseits die axiale Dichtwirkung erzeugt. Durch die axiale Verpressung weicht die Halbmonddichtung 118 in radialer Richtung aus, sodass die radiale Dichtwirkung verbessert wird. Auf diese Weise können mehrere Dichtstellen radial und axial mit der Halbmonddichtung 118 abgedichtet werden.

Beim Betrieb des Filters 10 strömt Rohfluid durch den Fluideinlass 30 in den Ringraum 54. Die Strömung des Rohfluids durch den Filter 10 ist mit durchgängigen Pfeilen angedeutet. Ein Teil des Rohfluids strömt von dem Ringraum 54 von radial außen durch das Filtermedium 38 und das fluiddurchlässige Stützrohr 42 nach radial innen in den Einsatzinnenraum 40. Das gereinigte Fluid verlässt den Einsatzinnenraum 40 durch die Einlassöffnung 102 und gelangt in den Reinfluidkanal 96. Vom Reinfluidkanal 96 strömt das gereinigte Fluid in den Fluidauslass 32 des Filtergehäuses 12 und verlässt den Filter 10.

Ein anderer Teil des Rohfluids wird aus dem Ringraum 54 zum Zentrifugenabscheider 26 umgeleitet. Dieser Teil des Rohfluids ist in der Figur 1 durch gepunktete Pfeile angedeutet. Das Rohfluid strömt dabei in einen Ringspalt 122 radial zwischen der radial äußeren Umfangsseite des Filtereinsatzes 22 und der radial inneren Umfangsseite des filterseitigen Zylinderabschnitts 112. Von dem Ringspalt 122 gelangt das Rohfluid in den stirnseitigen Rohfluidraum 110. Von dort aus strömt das Rohfluid durch die Rohfluidkanäle 92 in den Zentrifugeneinlassraum 94. Durch den Spalt zwischen dem Hohlzylinder 78 und dem zentrifugenseitigen Trennabschnitt 80 gelangt das Rohfluid in den Zwischenraum 76. Von dort aus strömt das Rohfluid durch den Zentrifugeneinlass 70 in den Rotor 58. Mit dem Rotor 58 wird das Rohfluid in hier nicht weiter interessierender bekannter Weise von Partikeln befreit. Das gereinigte Fluid sinkt der Schwerkraft folgend nach unten, verlässt das Rotorgehäuse des Rotors 58 durch entsprechende, hier nicht weiter interessierende Öffnungen und gelangt in den Zentrifugenauslassraum 68. Vom Zentrifugenauslassraum 68 strömt das gereinigte Fluid in den Fluidauslass 32 des Filtergehäuses 112.

Falls beispielsweise aufgrund der Beladung des Filtereinsatzes 22 mit Schmutz ein Differenzdruck zwischen der Rohfluidseite und der Reinfluidseite des Filtereinsatzes 22 ein vorgegebenes Maß übersteigt, wird das Umgehungsventil 36 geöffnet, sodass das Rohfluid direkt in den Einsatzinnenraum 40 strömen kann und dort wie oben beschrieben den Filter 10 durch den Fluidauslass 32 verlassen kann.

Falls beispielsweise aufgrund einer Störung ein Differenzdruck zwischen dem Zwischenraum 76 und dem Zentrifugenauslassraum 68 des Zentrifugenabscheiders 26 ein vorgegebenes Maß übersteigt, wird das Bypassventil 62 geöffnet, sodass das Rohfluid unter Umgehung des Zentrifugenabscheiders 26 direkt dem Fluidauslass 32 zuströmen kann.

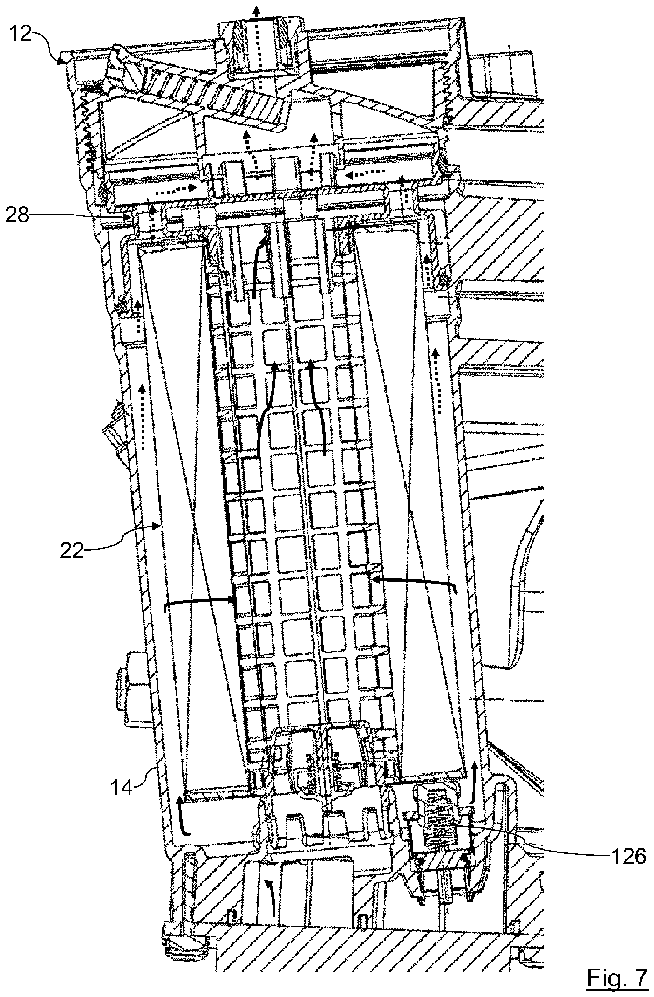

In der Figur 7 ist der Filter 10 in einem anderen Längsschnitt gezeigt, in dem ein Fluidablauf 126 im Boden des Gehäusetopfs 14 erkennbar ist. Durch den Fluidablauf 126 kann bei der Entnahme des Filtereinsatzes 22 automatisch ein Durchlass freigegeben werden, durch den in dem Filtergehäuse 12 enthaltenes Fluid ablaufen kann. Der Fluidablauf 126 kann mit der einlassseitigen Endscheibe 44 automatisch schließend betätigt werden, indem diese auf einen entsprechenden Betätigungsmechanismus des Fluidablaufs 126 in axialer Richtung zum Boden des Gehäusetopfs 14 drückt. Die einlassseitige Endscheibe 44 bitte daher einen Teil der Betätigungseinrichtung für den Fluidablauf 126. Die axiale Ausdehnung des Filtereinsatzes 22 ist so bemessen, dass beim Einschrauben der Halteeinheit 60 diese den Zwischendeckel 28 axial nach unten drückt, wodurch der Zwischendeckel 28 seinerseits den Filtereinsatz 22 axial gegen den Betätigungsmechanismus des Fluidablaufs 126 presst und dieser schließend betätigt wird.

## Patentansprüche

1. Filter (10) zur Reinigung von flüssigen Fluiden, mit einem Filtergehäuse (12) und einem Zwischendeckel (28),
wobei der Zwischendeckel (28) zur Abtrennung eines Filteraufnahmeraums (20) für wenigstens einen Filtereinsatz (22) von einem Zentrifugenaufnahmeraum (24) für wenigstens einen Zentrifugenabscheider (26) mittels einer Dreh- und/oder Steckbewegung bezüglich einer gedachten Achse (18) in einen Innenraum eines Filtergehäuses (12) eingebaut ist, wobei
der Zwischendeckel (28) wenigstens einen Reinfluidkanal (96) wenigstens mit bildet, welcher als fluidtechnische Verbindung zwischen einer Reinfluidseite des wenigstens einen Filtereinsatzes (22) und wenigstens einem Fluidauslass (32) des Filtergehäuses (12) für gereinigtes Reinfluid angeordnet ist oder werden kann, **dadurch gekennzeichnet, dass** wenigstens ein Rohfluidkanal (92) durch einen den wenigstens einen Reinfluidkanal (96) wenigstens mit bildenden Zwischenraum bezüglich der Achse (18) axial zwischen einem filterseitigen Trennabschnitt (88) und einem zentrifugenseitigen Trennabschnitt (80) des Zwischendeckels (28) führt, wobei der wenigstens eine Rohfluidkanal (92) in dem Zwischenraum von wenigstens einer Kanalwand (90) umgeben ist.

2. Filter nach Anspruch 1, **dadurch gekennzeichnet, dass** der Zwischendeckel (28) wenigstens einen Rohfluidkanal (92) aufweist, welcher als fluidtechnische Verbindung zwischen wenigstens einem Fluideinlass (30) des Filtergehäuses (12) für zu reinigendes Rohfluid und wenigstens einem Zentrifugeneinlass (70) des wenigstens einen Zentrifugenabscheiders (26) angeordnet ist oder werden kann.

3. Filter nach Anspruch 1 oder 2, **dadurch gekennzeichnet, dass** der Zwischendeckel (28) auf seiner dem wenigstens einen Filtereinsatz (22) zugewandten, bezüglich der Achse (18) axialen Stirnseite wenigstens eine Einlassöffnung (102) für den wenigstens einen Reinfluidkanal (96) aufweist, welche bei montiertem Zwischendeckel (28) mit wenigstens einer Auslassöffnung (50) für Reinfluid des wenigstens einen Filtereinsatzes (22) korrespondiert.

4. Filter nach Anspruch 1, 2 oder 3, **dadurch gekennzeichnet, dass** der Zwischendeckel (28) an wenigstens einer bezüglich der Achse (18) umfangsmäßigen Umfangsseite wenigstens eine Auslassöffnung (98) des wenigstens einen Reinfluidkanals (96) aufweist, welche bei montiertem Zwischendeckel (28) mit wenigstens einem Fluidauslass (32) des Filtergehäuses (12) für Reinfluid korrespondiert.

5. Filter nach einem der vorigen Ansprüche, **dadurch gekennzeichnet, dass** sich wenigstens eine Auslassöffnung (98) des wenigstens einen Reinfluidkanals (96) über den gesamten Außenumfang des Zwischendeckels (28) erstreckt.

6. Filter nach einem der vorigen Ansprüche, **dadurch gekennzeichnet, dass** der wenigstens eine Reinfluidkanal (96) als Zwischenraum bezüglich der Achse (18) axial zwischen einem filterseitigen Trennabschnitt (88) und einem zentrifugenseitigen Trennabschnitt (80) des Zwischendeckels (28) realisiert ist.

7. Filter nach einem der vorigen Ansprüche, **dadurch gekennzeichnet, dass** wenigstens ein Rohfluidkanal (92) eine filterseitige Stirnseite des Zwischendeckels (28) mit einer zentrifugenseitigen Stirnseite des Zwischendeckels (28) verbindet.

8. Filter nach einem der vorigen Ansprüche, **dadurch gekennzeichnet, dass** eine Mehrzahl von Rohfluidkanälen (92) bezüglich der Achse (18) umfangsmäßig verteilt angeordnet ist.

9. Filter nach einem der vorigen Ansprüche, **dadurch gekennzeichnet, dass** der Zwischendeckel (28) an seiner bezüglich der Achse (18) radial äußeren Umfangsseite wenigstens eine umfangsmäßig zusammenhängende Dichtung (114, 118) aufweist.

10. Filter nach einem der vorigen Ansprüche, **dadurch gekennzeichnet, dass** der Zwischendeckel (28) an seiner bezüglich der Achse (18) radial äußeren Umfangsseite zwei jeweils umfangsmäßig zusammenhängende Dichtungen (114, 118) aufweist, welche axial zueinander beabstandet sind, wobei axial zwischen den Dichtungen (114, 118) wenigstens eine Auslassöffnung (98) des wenigstens einen Reinfluidkanals (96) aus der Umfangsseite des Zwischendeckels (28) führt.

11. Filter nach einem der vorigen Ansprüche, **dadurch gekennzeichnet, dass** der Zwischendeckel (28) auf seiner zentrifugenseitigen Stirnseite wenigstens eine Zentrifugen-Zentriereinrichtung (82) zum Halten an wenigstens einem Teil des wenigstens einen Zentrifugenabscheiders (26) und/oder auf seiner filterseitigen Stirnseite wenigstens eine Filter-Zentriereinrichtung (104) zum Halten an dem wenigstens einen Filtereinsatz (22) aufweist.

12. Filter nach einem der vorigen Ansprüche, **dadurch gekennzeichnet, dass** der Zwischendeckel (28) auf seiner zentrifugenseitigen Stirnseite und/oder auf seiner filterseitigen Stirnseite becherförmig ausgestaltet ist.

13. Filter nach einem der vorhergehenden Ansprüche, mit einem Filtereinsatz (22) der austauschbaren in das Filtergehäuse (12) eingebaut ist,
- wobei der Filtereinsatz (22) auf einer bezüglich einer gedachten Achse (18) axialen Stirnseite wenigstens eine Verbindungseinrichtung (42, 50) aufweist, die zur Verbindung mit dem Zwischendeckel (28) ausgelegt ist,
- und wobei der Filtereinsatz (22) mittels einer Dreh- und/oder Steckbewegung bezüglich der Achse (18) in das Filtergehäuse (12) eingebaut und aus diesem ausgebaut werden kann, wobei
der Filtereinsatz (22) auf einer bezüglich der Achse (18) axialen Stirnseite, auf der sich die Verbindungseinrichtung (42, 50) befindet, wenigstens eine Auslassöffnung (50) für gereinigtes Reinfluid aufweist, welche mit wenigstens einer Einlassöffnung (102) des Reinfluidkanals (96) des Zwischendeckels (28) in Korrespondenz gebracht ist, wobei die wenigstens eine Auslassöffnung (50) die Verbindungseinrichtung wenigstens mit bildet.

14. Filter nach Anspruch 13, **dadurch gekennzeichnet, dass** der Filtereinsatz (22) wenigstens einen Teil einer Dichteinrichtung (105) aufweist, mit welcher die wenigstens eine Auslassöffnung (50) gegenüber dem Zwischendeckel (28) abgedichtet werden kann.

15. Filter nach Anspruch 13 oder 14, **dadurch gekennzeichnet, dass** der Filtereinsatz (22) auf seiner der Verbindungseinrichtung (50) axial abgewandten Stirnseite wenigstens einen Teil einer Betätigungseinrichtung (44) für einen Fluidablauf (126) des Filtergehäuses (12) aufweist.

16. Filter nach einem der vorhergehenden Ansprüche 13 - 15, wobei der Filtereinsatz und der Zwischendeckel in einen Gehäusetopf des Filtergehäuses (12) eingesetzt sind.

## Claims

1. A filter (10) for purifying liquid fluids, having a filter housing (12) and an intermediate cover (28),
wherein the intermediate cover (28) is installed in an interior space of a filter housing (12) for separating a filter accommodating space (20) for at least one filter insert (22) from a centrifuge accommodating space (24) for at least one centrifuge separator (26) using a rotary and/or plug-in movement with respect to an imaginary axis (18), wherein
the intermediate cover (28) at least contributes to form at least one clean fluid channel (96) which is or can be arranged as a fluid connection between a clean fluid side of the at least one filter insert (22) and at least one fluid outlet (32) of the filter housing (12) for purified clean fluid, **characterized in that** at least one raw fluid channel (92) leads through an intermediate space, which at least contributes to form the at least one clean fluid channel (96), axially with respect to the axis (18) between a filter-sided separating section (88) and a centrifuge-sided separating section (80) of the intermediate cover (28), wherein the at least one raw fluid channel (92) is surrounded in the intermediate space by at least one channel wall (90).

2. The filter according to claim 1, **characterized in that** the intermediate cover (28) features at least one raw fluid channel (92) which is or can be disposed as a fluid connection between at least one fluid inlet (30) of the filter housing (12) for raw fluid to be purified and at least one centrifuge inlet (70) of the at least one centrifuge separator (26).

3. The filter according to claim 1 or 2, **characterized in that** the intermediate cover (28) features, on its axial front face facing the at least one filter insert (22) with respect to the axis (18), at least one inlet port (102) for the at least one clean fluid channel (96) which, when the intermediate cover (28) is mounted, corresponds with at least one outlet port (50) for clean fluid of the at least one filter insert (22).

4. The filter according to claim 1, 2 or 3, **characterized in that** the intermediate cover (28) features at least one outlet opening (98) of the at least one clean fluid channel (96) on at least one circumferential side with respect to the axis (18), said outlet opening corresponding with at least one fluid outlet (32) of the filter housing (12) for clean fluid when the intermediate cover (28) is mounted.

5. The filter according to one of the preceding claims, **characterized in that** at least one outlet port (98) of the at least one clean fluid channel (96) extends across the entire outer periphery of the intermediate cover (28).

6. The filter according to one of the preceding claims, **characterized in that** the at least one clean fluid channel (96) is realized as intermediate space axially with respect to the axis (18) between a filter-sided separating section (88) and a centrifuge-sided separating section (80) of the intermediate cover (28).

7. The filter according to one of the preceding claims, **characterized in that** at least one raw fluid channel (92) connects a filter-sided front face of the intermediate cover (28) to a centrifuge-sided front face of the intermediate cover (28).

8. The filter according to one of the preceding claims, **characterized in that** a plurality of raw fluid channels (92) is disposed circumferentially distributed with respect to the axis (18).

9. The filter according to one of the preceding claims, **characterized in that** the intermediate cover (28) features at least one circumferentially continuous seal (114, 118) on its radially outer circumferential side with respect to the axis (18).

10. The filter according to one of the preceding claims, **characterized in that** the intermediate cover (28) features on its radially outer circumferential side with respect to the axis (18) two respective circumferentially connected seals (114, 118) which are axially spaced apart from one another, wherein at least one outlet port (98) of the at least one clean fluid channel (96) leads axially between the seals (114, 118) out of the circumferential side of the intermediate cover (28).

11. The filter according to one of the preceding claims, **characterized in that** the intermediate cover (28) features on its centrifuge-sided front face at least one centrifuge centering device (82) for holding on at least one part of the at least one centrifuge separator (26) and/or on its filter-sided front face at least one filter centering device (104) for holding on the at least one filter insert (22).

12. The filter according to one of the preceding claims, **characterized in that** the intermediate cover (28) is cup-shaped on its centrifuge-sided front face and/or on its filter-sided front face.

13. The filter according to one of the preceding claims, having a filter insert (22) replaceably installed in the filter housing (12),
- wherein the filter insert (22) features at least one connecting means (42, 50) on an axial front face with respect to an imaginary axis (18), the connecting means being designed for connection to the intermediate cover (28),
- and wherein the filter insert (22) can be installed in and removed from the filter housing (12) using a rotary and/or plug-in movement relative to the axis (18), wherein
the filter insert (22) features at least one outlet port (50) for purified clean fluid on a front face which is axial with respect to the axis (18) on which the connecting means (42, 50) is located, said outlet port being brought into correspondence with at least one inlet port (102) of the clean fluid channel (96) of the intermediate cover (28), wherein the at least one outlet port (50) at least contributes to form the connecting means.

14. The filter according to claim 13, **characterized in that** the filter insert (22) features at least one part of a sealing means (105) with which the at least one outlet port (50) can be sealed with respect to the intermediate cover (28).

15. The filter according to claim 13 or 14, **characterized in that** the filter insert (22) features at least one part of an actuating means (44) for a fluid outlet (126) of the filter housing (12) on its front face facing axially away from the connecting means (50).

16. The filter according to one of the preceding claims 13 to 15, wherein the filter insert and the intermediate cover are inserted into a housing pot of the filter housing (12).

## Revendications

1. Filtre (10) pour la purification de fluides liquides, ayant un boîtier de filtre (12) et un couvercle intermédiaire (28),
dans lequel le couvercle intermédiaire (28) est monté dans un espace intérieur d'un boîtier de filtre (12) pour séparer un espace de réception de filtre (20) pour au moins une cartouche filtrante (22) d'un espace de réception de centrifugeuse (24) pour au moins un séparateur de centrifugeuse (26) au moyen d'un mouvement de rotation et/ou d'enfichage par rapport à un axe imaginaire (18), dans lequel
le couvercle intermédiaire (28) contribue au moins à former au moins un canal de fluide pur (96) qui est ou peut être disposé en tant que liaison fluidique entre un côté de fluide pur de la cartouche filtrante (22), au moins au nombre d'une, et au moins une sortie de fluide (32) du boîtier de filtre (12) pour le fluide purifié, **caractérisé en ce qu'au** moins un canal de fluide brut (92) passe à travers un espace intermédiaire contribuant au moins à former en partie le canal de fluide pur (96), au moins au nombre d'un, par rapport à l'axe (18) axialement entre une section de séparation (88) côté filtre et une section de séparation (80) côté centrifuge, du couvercle intermédiaire (28), dans lequel le canal de fluide brut (92), au moins au nombre d'un, est entouré dans l'espace intermédiaire par au moins une paroi de canal (90).

2. Filtre selon la revendication 1, **caractérisé en ce que** le couvercle intermédiaire (28) présente au moins un canal de fluide brut (92) qui est ou peut être agencé en tant que connexion fluidique entre au moins une entrée de fluide (30) du boîtier de filtre (12) pour le fluide brut à purifier et l'entrée de centrifugeuse (70), au moins au nombre d'une, du séparateur de centrifugeuse (26), au moins au nombre d'un.

3. Filtre selon la revendication 1 ou 2, **caractérisé en ce que** le couvercle intermédiaire (28) présente, sur sa face frontale axiale tournée vers la cartouche filtrante (22), au moins au nombre d'une, par rapport à l'axe (18), au moins une ouverture d'admission (102) pour le canal de fluide pur (96), au moins au nombre d'un, qui correspond, lorsque le couvercle intermédiaire (28) est monté, à au moins un orifice de sortie (50) pour le fluide pur de la cartouche filtrante (22), au moins au nombre d'une.

4. Filtre selon la revendication 1, 2 ou 3, **caractérisé en ce que** le couvercle intermédiaire (28) présente, sur au moins un côté périphérique par rapport à l'axe (18), au moins un orifice de sortie (98) du canal de fluide pur (96), au moins au nombre d'un, qui correspond, lorsque le couvercle intermédiaire (28) est monté, à au moins une sortie de fluide (32) du boîtier de filtre (12) pour le fluide pur.

5. Filtre selon l'une quelconque des revendications précédentes, **caractérisé en ce qu'au** moins un orifice de sortie (98) du canal de fluide pur (96), au moins au nombre d'un, s'étend sur toute la périphérie extérieure du couvercle intermédiaire (28).

6. Filtre selon l'une quelconque des revendications précédentes, **caractérisé en ce que** le canal de fluide pur (96), au moins au nombre d'un, est réalisé axialement en tant qu'espace intermédiaire par rapport à l'axe (18) entre une section de séparation (88), côté filtre, et une section de séparation (80), côté centrifuge, du couvercle intermédiaire (28).

7. Filtre selon l'une quelconque des revendications précédentes, **caractérisé en ce qu'au** moins un canal de fluide brut (92) relie une face frontale, côté filtre, du couvercle intermédiaire (28) à une face frontale, côté centrifuge, du couvercle intermédiaire (28).

8. Filtre selon l'une quelconque des revendications précédentes, **caractérisé en ce qu'une** pluralité de canaux de fluide brut (92) sont répartis de manière circonférentielle par rapport à l'axe (18).

9. Filtre selon l'une quelconque des revendications précédentes, **caractérisé en ce que** le couvercle intermédiaire (28) présente sur son côté périphérique radialement extérieur par rapport à l'axe (18) au moins un joint d'étanchéité (114, 118) continu sur la périphérie.

10. Filtre selon l'une quelconque des revendications précédentes, **caractérisé en ce que** le couvercle intermédiaire (28) présente, sur son côté périphérique radialement extérieur par rapport à l'axe (18), deux joints d'étanchéité (114, 118) respectivement solidaires sur la circonférence, qui sont espacés axialement l'un de l'autre, dans lequel au moins une ouverture de sortie (98) du canal de fluide pur (96), au moins au nombre d'un, s'étend axialement entre les joints d'étanchéité (114, 118) hors du côté périphérique du couvercle intermédiaire (28).

11. Filtre selon l'une quelconque des revendications précédentes, **caractérisé en ce que** le couvercle intermédiaire (28) présente, sur sa face frontale côté centrifuge, au moins un dispositif de centrage centrifuge (82) destiné à maintenir sur au moins une partie du séparateur de centrifugeuse (26) au moins au nombre d'un, et/ou, sur sa face frontale côté filtre, au moins un dispositif de centrage de filtre (104) destiné à maintenir sur la cartouche filtrante (22), au moins au nombre d'une.

12. Filtre selon l'une quelconque des revendications précédentes, **caractérisé en ce que** le couvercle intermédiaire (28) est configuré en forme de coupe sur sa face frontale, côté centrifuge, et/ou sur sa face frontale, côté filtre.

13. Filtre selon l'une quelconque des revendications précédentes, ayant une cartouche filtrante (22) montée de manière échangeable dans le boîtier de filtre (12),
- dans lequel la cartouche filtrante (22) présente sur un côté frontal axial par rapport à un axe imaginaire (18) au moins un dispositif de raccordement (42, 50) conçu pour le raccordement avec le couvercle intermédiaire (28),
- et dans lequel la cartouche filtrante (22) peut être montée dans le boîtier de filtre (12) et démontée de celui-ci au moyen d'un mouvement de rotation et/ou d'enfichage par rapport à l'axe (18), dans lequel
la cartouche filtrante (22) présente, sur une face frontale axiale par rapport à l'axe (18), sur laquelle se trouve le dispositif de raccordement (42, 50), au moins un orifice de sortie (50) pour le fluide purifié, qui est amenée en correspondance avec au moins une ouverture d'admission (102) du canal de fluide pur (96) du couvercle intermédiaire (28), dans lequel l'orifice de sortie (50), au moins au nombre d'un, contribue à forme au moins en partie le dispositif de raccordement.

14. Filtre selon la revendication 13, **caractérisé en ce que** la cartouche filtrante (22) comprend au moins une partie d'un dispositif d'étanchéité (105) avec lequel l'orifice de sortie (50), au moins au nombre d'un, peut être rendu étanche par rapport au couvercle intermédiaire (28).

15. Filtre selon la revendication 13 ou 14, **caractérisé en ce que** la cartouche filtrante (22) présente, sur sa face frontale opposée axialement au dispositif de raccordement (50), au moins une partie d'un dispositif d'actionnement (44) pour une évacuation de fluide (126) du boîtier de filtre (12).

16. Filtre selon l'une quelconque des revendications précédentes 13 à 15, dans lequel la cartouche filtrante et le couvercle intermédiaire sont insérés dans un pot de boîtier du boîtier de filtre (12).
